# EUROPEAN PATENT SPECIFICATION

(11) **EP 1 242 986 B1**
(45) Date of publication and mention of the grant of the patent: **17.03.2004**
(21) Application number: 00979869.5
(22) Date of filing: 12.12.2000
(51) Int. Cl.: G08C 17/02, H04Q 7/38

(54) **METHOD AND DEVICE FOR CONTROLLING THE OPERATION OF ELECTRONIC DEVICES IN AN AIRCRAFT**
VERFAHREN UND VORRICHTUNG ZUM STEUERN DES BETRIEBS VON ELEKTRONISCHEN ANORDNUNGEN IN EINEM FLUGZEUG
PROCEDE ET DISPOSITIF POUR CONTROLER LE FONCTIONNEMENT DE DISPOSITIFS ELECTRONIQUES DANS UN AERONEF

(30) Priority: 17.12.1999 US 466141
(43) Date of publication of application: 25.09.2002
(73) Proprietor: Gateway, Inc., North Sioux City, SD 57049-2000 (US)
(72) Inventor: NELSON, Richard, F., Butte, MT 59702 (US)
(74) Representative: Viering, Jentschura & Partner
(86) International application number: PCT/IB2000/001885
(87) International publication number: WO 2001/045064

(56) References cited:
- WO-A-97/49255
- WO-A-99/55102
- DE-C- 19 730 595
- GB-A- 2 329 794

## Description

### Field of the Invention

The invention relates generally to wireless communication of data in computers, and more specifically to use of wireless communication to communicate between laptop computers or other electronic devices and an airplane data system in an airplane.

### Background

Concerns over electrical interference caused by electronic devices operated onboard aircraft has led to prohibition of use of most electronic devices during certain portions of a flight. It is widely believed that many microprocessor-driven devices may emit radio frequency noise that can interfere with an airplane's communication or flight control systems, and so pose a safety risk to the operation of the airplane. Also, devices such as cellular phones that are designed to emit radio signals at certain frequencies are similarly subject to restricted use rules, due to the same concerns over interference with electronic systems within the airplane.

Specific classes of electronic devices are typically subject to restrictions on use that vary with the perceived risk of interference and ease of deactivation. For example, watches, pacemakers and hearing aids may usually be used at any time, while use of devices such as radio transmitters, cellular telephones and remote-controlled toys is often banned altogether. But, a certain class of mid-risk devices often may be used during flights, but are prohibited from use during takeoffand landing. Such devices include handheld calculators or computer games, portable computer devices, portable compact disc and tape players, and electric shavers. While such devices may be used during the flight, the risk of interference is considered great enough that flight attendants enforce prohibition of their use during takeoff and landing by careful monitoring of passenger activity.

But, the few flight attendants an a typical flight may have a difficult time monitoring all passengers and ensuring compliance with the restriction, and even a single electronic device may emit enough radio frequency interference to interfere with the electronic systems on an aircraft. Even those passengers who desire to be in compliance with restrictions an use of electronic devices may not hear warnings, may turn electronic devices on too soon alfer takeoff, or may continue to operate devices into the landing portion of the flight. There is a need for a method or a device that serves to restrict operation of electronic devices during restricted portions of flight such as landing and takeoff, and that does so without requiring passenger action.

In WO 99/55102 a system for location and service provisioning based on mobile phone location is disclosed.

DE 197 30 595 C1 discloses a device including a transponder which notifies a base station if a portable device, such as a mobile telephone, CD player, radio communications device, computer, remote control toy, etc., is not switched off.

From WO 97/49255 a method for eliminating the disturbance caused by a mobile station situated within a certain area is known. In order to be able to prevent disturbance caused by a mobile station reliably, the mobile station is provided with control means for the muting of the mobile station as a response to a predetermined message transmitted to the mobile station, and transmitting means are arranged in said certain area for the transmitting of said predetermined message to a mobile station situated in the area in order to mute the mobile station.

GB 2 329 794 A discloses an apparatus for controlling an electronic device as it approaches a controlled zone. The apparatus includes a controller with an antenna located at an access point to the zone.

### Summary of the Invention

The present invention provides a method and apparatus that enables control via a wireless data connection of portable electronic devices while the devices are in an airplane. The wireless data connection of some embodiments is operable to control the power state of the portable electronic device via the wireless data connection. The invention provides in further embodiments the ability to communicate other data such as flight data to the portable electronic devices via the wireless data connection. In some embodiments, the wireless data connection and portable electronic device comprise a Bluetooth wireless data connection operatively coupled to a portable

### Brief Description of the Figures

Figure 1 shows a block diagram of a general purpose computer as may be used to practice an embodiment of the present.
Figure 2 shows a block diagram of a system for controlling portable electronic devices on an airplane via a wireless connection, consistent with an embodiment of the present invention.

### Detailed Description

In the following detailed description of sample embodiments of the invention, reference is made to the accompanying drawings which form a part hereof, and in which is shown by way of illustration specific sample embodiments in which the invention may be practiced. These embodiments are described in sufficient detail to enable those skilled in the art to practice the invention, and it is to be understood that other embodiments may be utilized and that logical, mechanical, electrical, and other changes may be made without departing from the spirit or scope of the present invention. The following detailed description is, therefore, not to be taken in a limiting sense, and the scope of the invention is defined only by the appended claims.

The present invention provides a method and apparatus that enables control of portable electronic devices while in an airplane via a wireless data connection. The wireless data connection of some embodiments is operable to control the power state of the portable electronic device via the wireless data connection. In various embodiments, the portable electronic device is a portable computerized device such as a laptop. The invention provides in further embodiments the ability to communicate other data such as flight data to the portable electronic devices via the wireless data connection.

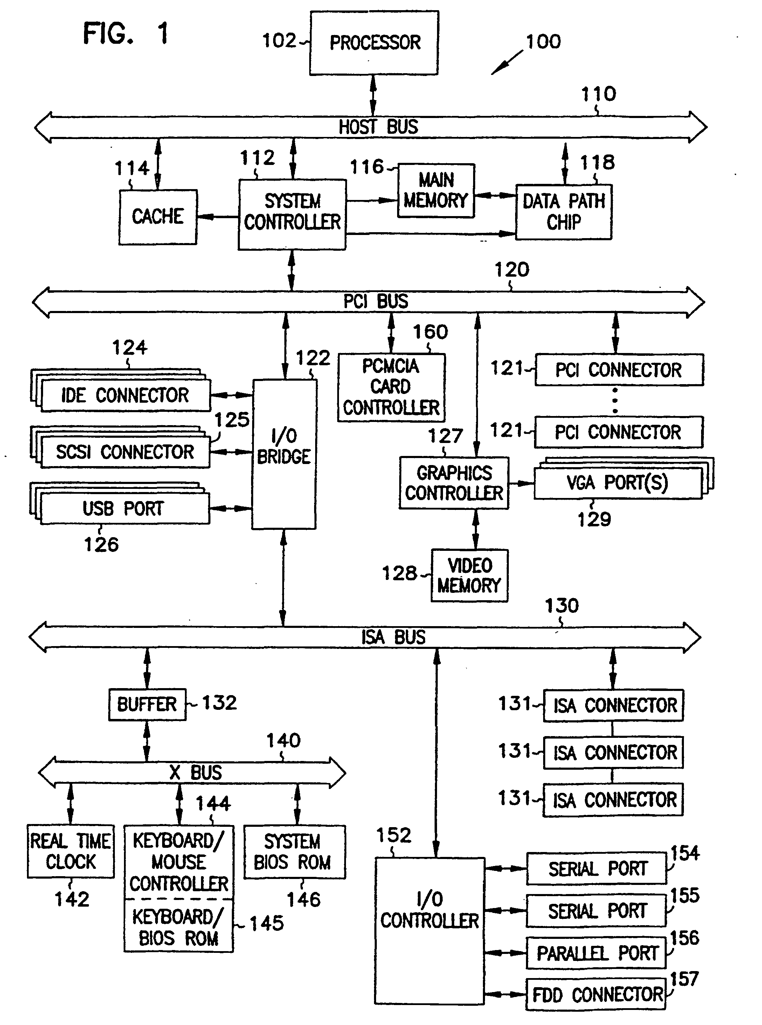

Figure 1 illustrates a general-purpose personal computer system 100, such as may be used as a portable electronic device consistent with the present invention. In this embodiment, processor 102, system controller 112, cache 114, and data-path chip 118 are each coupled to host bus 110. Processor 102 is a microprocessor such as a 486-type chip, a Pentium®, Pentium II® or other suitable microprocessor. Cache 114 provides high-speed local-memory data (in one embodiment, for example, 512 kB of cache memory) for processor 102, and is controlled by system controller 112, which loads cache 114 with data that is expected to be used soon after the data is placed in cache 112. Main memory 116 is coupled between system controller 114 and data-path chip 118, and in one embodiment, provides random-access memory of between 16 MB and 128 MB of data. In one embodiment, main memory 116 is provided on SIMMs (Single In-line Memory Modules), while in another embodiment, main memory 116 is provided on DIMMs (Dual In-line Memory Modules), each of which plugs into suitable sockets provided on a motherboard holding many of the other components shown in Figure 1. Main memory 116 includes standard DRAM (Dynamic Random-Access Memory), EDO (Extended Data Out) DRAM, SDRAM (Synchronous DRAM), RDRAM (Rambus DRAM), or other suitable memory technology. System controller 112 controls PCI (Peripheral Component Interconnect) bus 120, a local bus for system 100 that provides a high-speed data path between processor 102 and various peripheral devices, such as graphics devices, storage drives, network cabling, etc. Data-path chip 118 is also controlled by system controller 112 to assist in routing data between main memory 116, host bus 110, and PCI bus 120.

In one embodiment, PCI bus 120 provides a 32-bit-wide data path that runs at 33 MHz. In another embodiment, PCI bus 120 provides a 64-bit-wide data path that runs at 33 MHz. In yet other embodiments, PCI bus 120 provides 32-bit-wide or 64-bit-wide data paths that runs at higher speeds. In one embodiment, PCI bus 120 provides connectivity to I/O bridge 122, graphics controller 127, and one or more PCI connectors 121 (i.e., sockets into which a card edge may be inserted), each of which accepts a standard PCI card. In one embodiment, I/O bridge 122 and graphics controller 127 are each integrated on the motherboard along with system controller 112, in order to avoid a board-connector-board signal-crossing interface and thus provide better speed and reliability. In the embodiment shown, graphics controller 127 is coupled to a video memory 128 (that includes memory such as DRAM, EDO DRAM, SDRAM, SGRAM or VRAM (Video Random-Access Memory)), and drives VGA (Video Graphics Adaptor) port 129. VGA port 129 can connect to industry-standard monitors such as VGA-type, SVGA (Super VGA)-type, XGA-type (extended Graphics Adaptor) or SXGA-type (Super XGA) display devices. Other input/output (I/O) cards having a PCI interface can be plugged into PCI connectors 121.

In one embodiment, I/O bridge 122 is a chip that provides connection and control to one or more independent IDE connectors 124-125, to a USB (Universal Serial Bus) port 126, and to ISA (Industry Standard Architecture) bus 130. In this embodiment, IDE connector 124 provides connectivity for up to two standard IDE-type devices such as hard disk drives, CDROM (Compact Disk-Read-Only Memory) drives, DVD (Digital Video Disk) drives, or TBU (Tape-Backup Unit) devices. In one similar embodiment, two IDE connectors 124 are provided, and each provide the EIDE (Enhanced IDE) architecture. In the embodiment shown, SCSI (Small Computer System Interface) connector 125 provides connectivity for up to seven or fifteen SCSI-type devices (depending on the version of SCSI supported by the embodiment). In one embodiment, I/O bridge 122 provides ISA bus 130 having one or more ISA connectors 131 (in one embodiment, three connectors are provided). In one embodiment, ISA bus 130 is coupled to I/O controller 152, which in turn provides connections to two serial ports 154 and 155, parallel port 156, and FDD (Floppy-Disk Drive) connector 157. In one embodiment, ISA bus 130 is connected to buffer 132, which is connected to X bus 140, which provides connections to real-time clock 142, keyboard/mouse controller 144 and keyboard BIOS ROM (Basic Input/Output System Read-Only Memory) 145, and to system BIOS ROM 146.

A PCMCIA card controller (also known as a PC Card controller or CardBus controller) 160 is in one embodiment connected to the PCI bus 120, and is operable to interface the computer 100 to various PCMCIA hardware cads that may be inserted into PCMCIA slots of the computer system. The PCMCIA slots may receive, for example, a wireless data communication card such as a Bluetooth system complaint communication card.

Figure 1 shows one exemplary embodiment of a computer system that may be used with the present invention, however other configurations, such as varying bus structures and memory arrangements are specifically contemplated and are within the scope of the invention. For example, the computer system of Figure 1 is in one embodiment of the invention implemented as a portable laptop computer system equipped with wireless data communication capability.

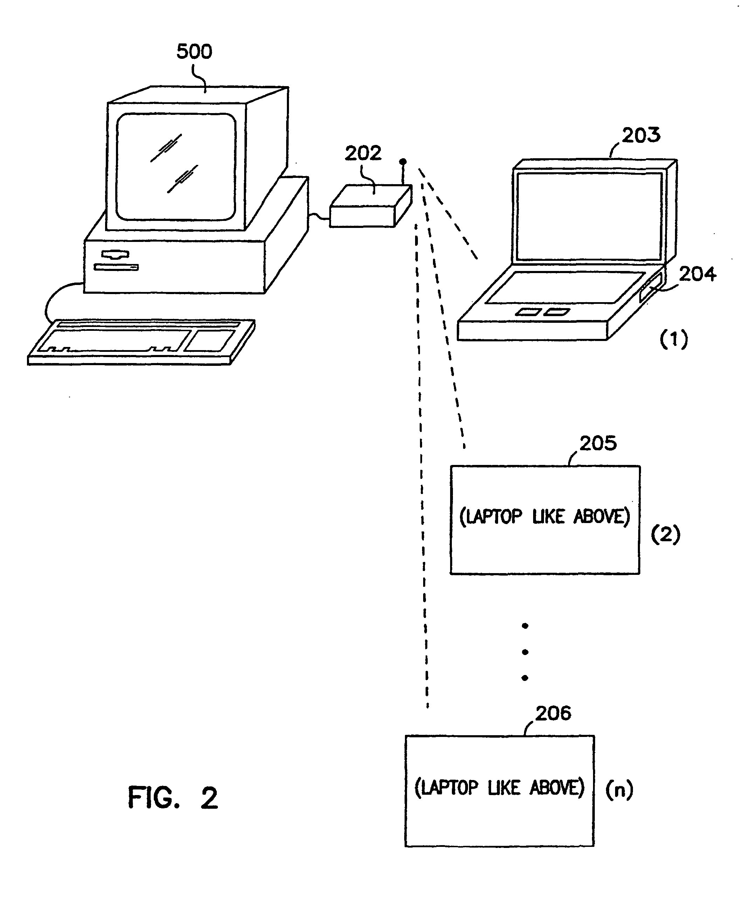

Figure 2 illustrates a system for controlling portable electronic devices on an airplane via a wireless connection, consistent with an embodiment of the present invention. Embodiments of both the apparatus and of methods of use of the apparatus consistent with the present invention are described herein, with reference to the elements of Figure 2.

An electronic device control apparatus 201 has operatively coupled to it a wireless communication device 202 operable to send a wireless signal. The electronic device control apparatus is in some embodiments a personal computer with software executing thereon that enables the computer to send various signals via the wireless communication device 202. The wireless communication device 202 is in various embodiments an infrared interface such as an IrDA (Infrared Data Association) interface, a radio-frequency interface such as a Bluetooth wireless interface, or any other suitable device. In various embodiments, the wireless communication device is operable only to broadcast or to send data, while in other embodiments the wireless communication device comprises a transceiver that supports 2-way communication.

The electronic device control apparatus 201 utilizes the wireless communication device 202 to communicate with at least one portable electronic device 203. The portable electronic device 203 may be any portable electronic device, including in various embodiments portable computers, cellular telephones, personal digital assistant (PDA) devices such as the PalinPilot PDA, or any other suitable device. The portable electronic device 203 comprises in part a wireless signal receiving device 204 operable to receive a wireless communication signal from the wireless communication device 202. The wireless signal receiving device 204 may be any type of device that is capable of receiving a wireless signal as is emitted by wireless communication device 202, and so varies with various embodiments of the wireless communication device. For example, the wireless signal receiving device 204 of one embodiment is a Bluetooth wireless data communication device implemented in a PC Card (also known as a PCMCIA card or CardBus card) which interfaces with a portable personal computer as is shown in Figure 2.

In various embodiments of the invention, any number of portable electronic devices 203, 205 and 206 may receive the signal emitted by the wireless communication device 202. These portable electronic devices may be of varying type, so long as each device in a single embodiment of the system is capable of receiving a signal emitted by the wireless communication device 202 of the same system.

In operation, the electronic device control apparatus sends data via wireless communication device 202 that indicates a desired operational or power state of the at least one portable electronic device 203, 205 and 206. For example, when an airplane is preparing to land, the electronic device control apparatus initiates sending of data via the wireless communication device 202, the data indicating that the portable electronic devices are to be brought to a reduced power or operational state that results in a reduction in potential for radiated radio frequency emissions that may interfere with electronic systems on the airplane.

The electronic device or devices are capable of receiving the transmitted data via the wireless signal receiving devices 204 associated with each electronic device, and are further capable of altering the electronic device power state in response to the transmitted signal. For example, where the signal indicates that the devices are to operate in reduced power state to reduce radio frequency emissions, each portable electronic device receives the signal and reduces its power state if necessary. In various embodiments, the portable electronic devices may in response to such a signal either power up or power down entirely, or may increase or reduce function such that the potential for radiated interference during decreased function is greatly reduced. For example, a device may reduce its clock speed in response to a signal indicating a reduced power state, where the reduction in clock speed results in a reduction in highfrequency radio frequency emissions.

In still further embodiments, the wireless data connection is further operable to transmit flight data information or other data, providing additional data to the portable electronic devices 203, 205, and 206. The flight data comprises data such as arrival and departure times, flight maps, food and beverage service information, in-flight entertainment information, or other similar information. In still other embodiments, the wireless data connection provides additional data, such as a connection to the Internet or e-mail capability. Such enhanced capability may be provided in various embodiments for a fee, or may be provided to passengers in certain classes of travel, or otherwise restricted in availability.

Communication between the electronic device control apparatus 201 and the at least one portable electronic device 203 is in some embodiments provided via a Bluetooth wireless communication device, which is a device supporting a wireless communication standard developed by the Bluetooth Special Interest Group, a consortioum of computer and wireless communication companies. The Bluetooth wireless communication standard is an example of a wireless communication system that is sometimes referred to as a PAN, or private area network system. Use of such systems is consistent with the present invention, which in different embodiments may also implement any other suitable wireless data communication methods.

The present invention provides in its various embodiments a method and apparatus that enable control via a wireless data connection of portable electronic devices while the devices are in an airplane. The wireless data connection of some embodiments is operable to control the power state of the portable electronic device via the wireless data connection. The invention provides in further embodiments the ability to communicate other data such as flight data to the portable electronic devices via the wireless data connection. In some embodiments, the wireless data connection and portable electronic device comprise a Bluetooth wireless data connection device or other personal area network connection device operatively coupled to a portable computer.

Although specific embodiments have been illustrated and described herein, it will be appreciated by those of ordinary skill in the art that any arrangement which is calculated to achieve the same purpose may be substituted for the specific embodiments shown. This application is intended to cover any adaptations or variations of the invention. It is intended that this invention be limited only by the claims.

## Claims

1. A method for remotely controlling the operation of at least one portable electronic device (203) while the portable electronic device (203) is on an aircraft comprising:
providing a data signal via a wireless data connection to the portable electronic device (203) indicating a desired power state of the portable electronic device (203);
changing the current power state of the portable electronic device (203) to the desired power state in response to the data signal if the current power state is not the desired power state during restricted portions of a flight; and
transmitting flight-related data via the wireless data connection to the portable electronic device (203).

2. The method of claim 1, wherein the wireless data connection comprises a Bluetooth wireless data connection.

3. An electronic device control apparatus (201) for use on an airplane, the electronic device control apparatus (201) operable to send a data signal via a wireless data connection to at least one portable electronic device (203) to control the power state of the at least one portable electronic device (203), during restricted portions of a flight, the portable electronic device (203) operable to change its power state in response to the wireless signal, and the electronic device control apparatus (201) operable to provide flight-related data to the at least one portable electronic device (203) via the wireless signal.

4. The eletronic device control apparatus (201) of claim 3, further comprising a Bluetooth wireless data transmitter (202) operable to send the wireless signal from the electronic device control apparatus (201) to the at least one portable electronic device (203).

## Patentansprüche

1. Verfahren zum Fernsteuern des Betriebs von wenigstens einer tragbaren elektronischen Vorrichtung (203), während die tragbare elektronische Vorrichtung (203) in einem Flugzeug ist, aufweisend:
Liefern eines Datensignals über eine drahtlose Datenverbindung zu der tragbaren elektronischen Vorrichtung (203), das einen gewünschten Betriebszustand der tragbaren elektronischen Vorrichtung (203) anzeigt;
Ändern des gegenwärtigen Betriebszustandes der tragbaren elektronischen Vorrichtung (203) in den gewünschten Betriebszustand als Antwort auf das Datensignal, falls der gegenwärtige Betriebszustand nicht der gewünschte Betriebszustand ist, während Einschränkung unterworfener Abschnitte eines Fluges und
Übertragen flugbezogener Daten über die drahtlose Datenverbindung zu der tragbaren elektronischen Vorrichtung (203).

2. Verfahren gemäß Anspruch 1, wobei die drahtlose Datenverbindung eine Bluetooth-drahtlos-Datenverbindung aufweist.

3. Elektronische-Vorrichtung-Steuervorrichtung (201) zum Gebrauch innerhalb eines Flugzeugs, wobei die Elektronische-Vorrichtung-Steuervorrichtung (201) betriebsfähig ist, ein Datensignal über eine drahtlose Datenverbindung zu wenigstens einer tragbaren elektronischen Vorrichtung (203) zu senden, um den Betriebszustand der wenigstens einen tragbaren elektronischen Vorrichtung (203) während Einschränkungen unterworfenen Abschnitte eines Fluges zu steuern, wobei die tragbare elektronische Vorrichtung (203) betriebsfähig ist, seinen Betriebszustand in Antwort auf das drahtlose Signal zu ändern und wobei die Elektronische-Vorrichtung-Steuervorrichtung (201) betriebsfähig ist, über das drahtlose Signal flugbezogene Daten zu der wenigstens einen tragbaren elektronischen Vorrichtung (203) zu liefern.

4. Elektronische-Vorrichtung-Steuervorrichtung (201) gemäß Anspruch 3, ferner aufweisend einen Bluetoothdrahtlos-Sender (202), der betriebsfähig ist, das drahtlose Signal von der Elektronische-Vorrichtung-Steuervorrichtung (201) zu der wenigstens einen tragbaren elektronischen Vorrichtung (203) zu senden.

## Revendications

1. Procédé pour commander à distance le fonctionnement d'au moins un dispositif électronique portable (203) alors que le dispositif électronique portable (203) est situé dans un avion, consistant à :
envoyer un signal de données par l'intermédiaire d'une connexion de données sans fil au dispositif électronique portable (203) indiquant un état d'alimentation désiré du dispositif électronique portable (203);
modifier l'état de puissance actuel du dispositif sélectronique portable (203) pour l'amener dans l'état de puissance désiré en réponse au signal de données si l'état de puissance actuel n'est pas l'état de puissance désiré pendant des parties limitées d'un vol; et
transmettre des données associées au vol au dispositif électronique portable (203) par l'intermédiaire de la connexion de données sans fil.

2. Procédé selon la revendication 1, selon lequel la connexion de données sans fil comprend une connexion de données sans fil Bluetooth.

3. Dispositif (201) de commande d'un dispositif électronique, destiné à être utilisé dans un avion, le dispositif (201) de commande du dispositif électronique pouvant agir de manière à envoyer un signal de données par l'intermédiaire d'une connexion sans fil à au moins un dispositif électronique portable (203) pour commander l'état de puissance d'au moins un dispositif électronique portable (203) pendant des parties limitées d'un vol, le dispositif électronique portable (203) pouvant agir de manière à modifier son état de puissance en réponse au signal sans fil, et le dispositif (201) de commande du dispositif électronique pouvant agir de manière à délivrer des données associées au vol au au moins un dispositif électronique portable (203) par l'intermédiaire du signal sans fil.

4. Dispositif (201) de commande de dispositif électronique selon la revendication 3, comprenant en outre un émetteur (202) de données sans fil Bluetooth pouvant agir de manière à émettre le signal sans fil depuis le dispositif (201) de commande du dispositif électronique au au moins un dispositif électronique portable (203).
